# EUROPEAN PATENT APPLICATION

(11) **EP 4 400 480 A1**
(43) Date of publication of application: **17.07.2024**
(21) Application number: 22867275.4
(22) Date of filing: 01.09.2022
(51) Int. Cl.: C01G 23/04, H01M 4/86, H01M 8/10

(54) **ELECTROCONDUCTIVE TITANIUM OXIDE, METAL-SUPPORTED ELECTROCONDUCTIVE TITANIUM OXIDE, MEMBRANE ELECTRODE ASSEMBLY, SOLID POLYMER ELECTROLYTE FUEL CELL, METHOD FOR PRODUCING ELECTROCONDUCTIVE TITANIUM OXIDE, AND METHOD FOR PRODUCING METAL-SUPPORTED ELECTROCONDUCTIVE TITANIUM OXIDE**

(30) Priority: 08.09.2021 JP 2021146229
(71) Applicant: HIROSAKI UNIVERSITY, Hirosaki-shi, Aomori 036-8560 (JP); NATIONAL UNIVERSITY CORPORATION, IWATE UNIVERSITY, Morioka-shi, Iwate 020-8550 (JP)
(72) Inventor: CHISAKA Mitsuharu, Hirosaki-shi, Aomori 036-8560 (JP); TAKEGUCHI Tatsuya, Morioka-shi, Iwate 020-8550 (JP)
(74) Representative: Maiwald GmbH
(86) International application number: PCT/JP2022/032920
(87) International publication number: WO 2023/037953

(57) **Abstract**

The present invention addresses the problem of suppressing any lowering of durability in a carrier of a catalyst layer. This electroconductive titanium oxide has an electroconductivity of 0.1 S/cm or greater as measured under a pressure of 10 MPa.

## Description

### TECHNICAL FIELD

The present invention relates to an electroconductive titanium oxide, a metal-supported electroconductive titanium oxide, a membrane electrode assembly, a solid polymer electrolyte fuel cell, a method for producing an electroconductive titanium oxide, and a method for producing a metal-supported electroconductive titanium oxide.

### BACKGROUND ART

A solid polymer electrolyte fuel cell includes a membrane electrode assembly including a solid polymer electrolyte layer and a pair of catalyst layers bonded to the solid polymer electrolyte layer. The solid polymer electrolyte fuel cell also includes a pair of gas diffusion layers and a pair of separators.

Generally, the gas diffusion layers are made of a porous carbon material, and the separators are made of a metal material. The catalyst layers have a structure in which fine particles of noble metal, such as Pt, are supported on the surface of a support. A carbon material is generally used as the support.

Patent Document 1 describes the use of a fluoropolymer, such as Nafion^{®}, for the solid polymer electrolyte layer of a membrane electrode assembly.

### CITATION LIST

### PATENT LITERATURE

Patent Document 1: Japanese Laid-Open Patent Publication No. 2016-219179

### SUMMARY OF INVENTION

### TECHNICAL PROBLEM

Since a fluoropolymer is a superacidic solid acid, a membrane electrode assembly that uses a fluoropolymer may be used under superacidic conditions. The cell voltage in normal operation of a solid polymer electrolyte fuel cell is in a range of 0.4 to 1.0 V, but the cell voltage may rise to 1.5 V when starting or stopping. This may cause a reaction that electrochemically oxidizes the carbon material of each catalyst layer, thereby decomposing the carbon material into CO₂. The decomposition reaction of the carbon material may lower the durability of the support.

### SOLUTION TO PROBLEM

An electroconductive titanium oxide for solving the above problems has an electrical conductivity greater than or equal to 0.1 S/cm when measured under a pressure of 10 MPa.

The electroconductive titanium oxide preferably has a specific surface area greater than or equal to 100 m²/g.

A metal-supported electroconductive titanium oxide for solving the above problems includes the electroconductive titanium oxide and metal particles supported on the electroconductive titanium oxide.

A membrane electrode assembly for solving the above problems includes a solid polymer electrolyte layer and a pair of catalyst layers bonded to the solid polymer electrolyte layer. At least one of the catalyst layers includes the metal-supported electroconductive titanium oxide.

A solid polymer electrolyte fuel cell for solving the above problems includes the membrane electrode assembly, a pair of gas diffusion layers, and a pair of separators.

A method for producing an electroconductive titanium oxide for solving the above problems includes: a gelation step of forming a gel from a solution including a titanium source and a carbon source, a drying step of drying the gel obtained in the gelation step at a temperature in a range of 105°C to 200°C to prepare a dried material, and a heating step of heating the dried material at a temperature in a range of 800°C to 1200°C in an atmosphere containing hydrogen.

A method for producing a metal-supported electroconductive titanium oxide for solving the above problems includes: a dispersing step of preparing a fluid dispersion by dispersing, in an organic solvent having a hydroxyl group, a metal solution and an electroconductive titanium oxide produced by the method for producing a conductive titanium oxide, and a supporting step of supporting metal in the metal solution on the electroconductive titanium oxide by heating the fluid dispersion.

### ADVANTAGEOUS EFFECTS OF INVENTION

The present invention succeeds in suppressing the decreases in durability of a support of a catalyst layer.

### BRIEF DESCRIPTION OF DRAWINGS

Fig. 1 is an exploded perspective view of a solid polymer electrolyte fuel cell according to the present embodiment.
Fig. 2 is a diagram showing X-ray diffraction patterns of electroconductive titanium oxides of the present embodiment.
Fig. 3 is a diagram showing an X-ray diffraction pattern of another electroconductive titanium oxide of the present embodiment.
Fig. 4 is a diagram showing an X-ray diffraction pattern of yet another electroconductive titanium oxide of the present embodiment.
Fig. 5 is a graph showing the measurement results of powder electrical conductivity of electroconductive titanium oxides.
Fig. 6 is an adsorption isotherm of an electroconductive titanium oxide of the present embodiment.
Fig. 7 is a graph showing the power generation characteristics of single cell using membrane electrode assemblies.
Fig. 8 is a graph showing the power generation characteristics of single cell using other membrane electrode assemblies.
Fig. 9 is a graph showing the results of an accelerated deterioration test of a single cell using a membrane electrode assembly of the present embodiment.

### DESCRIPTION OF EMBODIMENTS

An electroconductive titanium oxide, a metal-supported electroconductive titanium oxide, a membrane electrode assembly, a solid polymer electrolyte fuel cell, a method for producing an electroconductive titanium oxide, and a method for producing a metal-supported electroconductive titanium oxide according to embodiments of the present invention are now described.

### [Solid Polymer Electrolyte Fuel Cell]

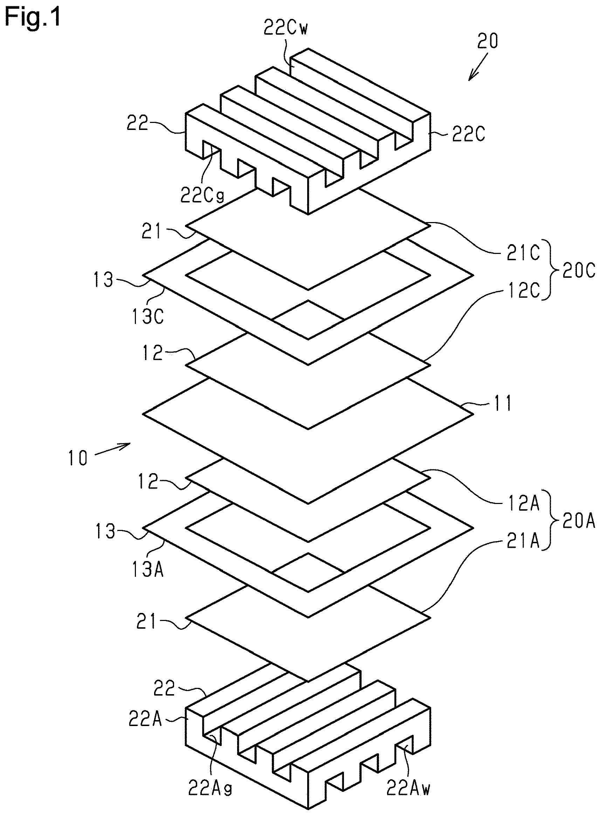

As shown in Fig. 1, a solid polymer electrolyte fuel cell (hereinafter also referred to as "PEFC") 20 includes a membrane electrode assembly (hereinafter also referred to as an "MEA") 10, which includes a solid polymer electrolyte layer 11 and a pair of catalyst layers 12 bonded to the solid polymer electrolyte layer 11. One of the catalyst layers 12 forms an anode-side electrode catalyst layer 12A, and the other forms a cathode-side electrode catalyst layer 12C.

The PEFC 20 also includes a pair of gaskets 13, a pair of gas diffusion layers (hereinafter also referred to as "GDLs") 21, and a pair of separators 22.

Each catalyst layer 12 has a structure in which an electrode catalyst is supported on the surface of a support. An electroconductive titanium oxide according to the present invention may be used as a support of the catalyst layer 12. A metal-supported electroconductive titanium oxide according to the present invention can be used as the anode-side electrode catalyst layer 12A of the pair of catalyst layers 12 described above. Alternatively, it can be used as the cathode-side electrode catalyst layer 12C. It can also be used for both the anode-side electrode catalyst layer 12A and the cathode-side electrode catalyst layer 12C.

The components of the PEFC 20 are now described.

### [Solid Polymer Electrolyte Layer]

As shown in Fig. 1, the solid polymer electrolyte layer 11 is a solid polymer membrane having proton conductivity.

There is no particular limitation on the material of the solid polymer electrolyte layer 11, and a fluoropolymer electrolyte or a hydrocarbon polymer electrolyte may be used.

Specific examples of fluoropolymer electrolytes include Nafion^{®} manufactured by DuPont de Nemours, Inc, FLMION^{®} manufactured by Asahi Glass Co., Ltd., ACIPLEX^{®} manufactured by Asahi Kasei Corporation, and GORE-SELECT^{®} manufactured W. L. Gore &Associates, Inc.

Examples of the hydrocarbon polymer electrolyte membrane include electrolyte membrane such as sulfonated polyether ketone, sulfonated polyether sulfone, sulfonated polyether ether sulfone, sulfonated polysulfide, and sulfonated polyphenylene.

As shown in Fig. 1, the solid polymer electrolyte layer 11 has a pair of surfaces. One of these surfaces is bonded to the anode-side electrode catalyst layer 12A. The other surface is bonded to the cathode-side electrode catalyst layer 12C. That is, a pair of catalyst layers 12 including the anode-side electrode catalyst layer 12A and the cathode-side electrode catalyst layer 12C is bonded to opposite surfaces of the solid polymer electrolyte layer 11. The MEA 10 is formed by bonding the catalyst layers 12 to the opposite surfaces of the solid polymer electrolyte layer 11.

In the solid polymer electrolyte layer 11, the surface bonded to the cathode-side electrode catalyst layer 12C is a cathode surface, and the surface bonded to the anode-side electrode catalyst layer 12A is an anode surface.

### [Catalyst Layer]

As shown in Fig. 1, the catalyst layers 12 include the anode-side electrode catalyst layer 12A and the cathode-side electrode catalyst layer 12C. Each catalyst layer 12 includes a support and an electrode catalyst supported on the surface of the support.

### (Support)

The support is made of an electroconductive titanium oxide. Specifically, the support is formed by particulate electroconductive titanium oxide gathering into a membrane.

The electroconductive titanium oxide has an electrical conductivity greater than or equal to 0.1 S/cm when measured under a pressure of 10 MPa.

The electroconductive titanium oxide preferably has an electrical conductivity greater than or equal to 1 S/cm when measured under a pressure of 10 MPa.

The electroconductive titanium oxide having an electrical conductivity within the above numerical range has the same level of electrical conductivity as graphite. As such, it can be used in place of the carbon material commonly used as a support of the catalyst layer 12. The use of the electroconductive titanium oxide, which has high durability, as a support of the catalyst layer 12 advantageously suppresses the decreases in durability of the support. A method for measuring the electrical conductivity will be described below.

The electroconductive titanium oxide preferably has a specific surface area greater than or equal to 100 m² /g, and more preferably greater than or equal to 150 m² /g.

A specific surface area within the above numerical range increases the relative amount of the supported electrode catalyst. As such, when used for the catalyst layer 12 of the solid polymer electrolyte fuel cell 20, it contributes to improved power generation performance.

There is no particular limitation on the method for measuring the specific surface area, and it can be measured by a gas adsorption method known as the BET method, using nitrogen (N₂) as the adsorbate molecules.

There is no particular limitation on the particle size of the electroconductive titanium oxide, but the average particle size is preferably less than or equal to 500 nm, and more preferably less than or equal to 100 nm.

The electroconductive titanium oxide having an average particle size in the above numerical range increases the relative specific surface area of the support.

There is no particular limitation on the method for measuring the average particle size of the electroconductive titanium oxide, and it may be measured by observing particles with an electron microscope to measure their particle sizes and calculating the average value.

There is no particular limitation on the crystal structure of the electroconductive titanium oxide, and it may be a rutile structure of TiOz or a corundum structure of Ti₂O₃. Furthermore, it may have Magneli phase having a composition of TiₙO₂ₙ₋₁ (n = 4 to 9), or a composition of TisOs. Among these, a structure having Magneli phase or a composition of TisOs is preferable because it is more likely to provide high electrical conductivity. Furthermore, a structure having Magneli phase is preferable because it is more likely to have even higher electrical conductivity.

The electroconductive titanium oxide preferably consists of a single phase.

There is no particular limitation on the method for measuring the crystal structure of the electroconductive titanium oxide, and a known X-ray diffraction apparatus (hereinafter also referred to as "XRD instrument") may be used, for example.

The support may contain materials other than the electroconductive titanium oxide as long as the advantageous effects of the present invention are achieved. Examples of materials other than electroconductive titanium oxide include carbon materials, such as graphite.

### (Electrode Catalyst)

The electrode catalyst is a catalyst for promoting an oxidation-reduction reaction in each catalyst layer 12. The cathode promotes an oxygen reduction reaction represented by the following formula (1). The anode promotes a hydrogen oxidation reaction represented by the following formula (2).

4H⁺ + O₂ + 4e → 2H₂O Formula (1)

H₂ → 2H⁺ + 2e Formula (2)

The above-mentioned oxidation-reduction reaction is also referred to as an electrochemical reaction.

There is no particular limitation on the type of electrode catalyst, and any noble metal catalyst or non-noble metal catalyst that exhibits electrochemical catalytic activity may be used.

Specific examples of electrode catalysts include noble metals, such as platinum (Pt), ruthenium (Ru), iridium (Ir), palladium (Pd), rhodium (Rh), osmium (Os), gold (Au), and silver (Ag), and alloys containing these noble metals. Further examples include tantalum (Ta), zirconium (Zr), titanium (Ti), molybdenum (Mo), chromium (Cr), cobalt (Co), and iron (Fe).

There is no particular limitation on the amount of supported electrode catalyst, but it is preferably greater than or equal to 10%, and more preferably greater than or equal to 15%, based on the sum of the mass of the electrode catalyst and the mass of the catalyst support.

### [Gasket]

As shown in Fig. 1, the cathode-side electrode catalyst layer 12C and the anode-side electrode catalyst layer 12A are formed to be slightly smaller than the solid polymer electrolyte layer 11, and are bonded to the sections of the solid polymer electrolyte layer 11 that are inside the outer edge.

An anode-side gasket 13A, which is one of the pair of gaskets 13, is placed on the outer peripheral section of the anode surface of the solid polymer electrolyte layer 11 that is not covered by the anode-side electrode catalyst layer 12A.

A cathode-side gasket 13C, which is the other of the pair of gaskets 13, is placed on the outer peripheral section of the cathode surface of the solid polymer electrolyte layer 11 that is not covered by the cathode-side electrode catalyst layer 12C.

There is no particular limitation on the material of the gaskets 13, and a fluorine resin may be used, for example. Specifically, a film made of fluorine resin may be used.

The cathode-side gasket 13C and the anode-side gasket 13A limit gas leakage from the outer peripheral section of the solid polymer electrolyte layer 11.

### [GDL]

As shown in Fig. 1, the pair of GDLs 21 are arranged on the opposite sides of the MEA 10. A cathode-side gas diffusion layer (hereinafter also referred to as a "cathode-side GDL") 21C is placed in contact with the cathode-side electrode catalyst layer 12C of the MEA 10. An anode-side gas diffusion layer (hereinafter also referred to as an "anode-side GDL") 21A is placed in contact with the anode-side electrode catalyst layer 12A of the MEA 10.

The pair of GDLs 21 are made of a material that has gas diffusivity and electrical conductivity. There is no particular limitation on the material of the GDLs 21, and porous carbon materials such as carbon cloth, carbon paper, and nonwoven fabric may be used, for example.

The cathode-side electrode catalyst layer 12C and the cathode-side GDL 21C form a cathode 20C, which is also referred to as an air electrode. The anode-side electrode catalyst layer 12A and the anode-side GDL 21A form an anode 20A, which is also referred to as a fuel electrode. A single cell is formed by arranging the cathode-side GDL 21C and the anode-side GDL 21A on the MEA 10.

### [Separator]

As shown in Fig. 1, the pair of separators 22 are arranged on the outer sides of the GDLs 21 arranged on the opposite sides of the MEA 10. The separator 22 placed on the cathode-side GDL 21C is referred to as a cathode-side separator 22C. The separator 22 placed on the anode-side GDL 21A is referred to as an anode-side separator 22A.

The pair of separators 22 each has grooves in both sides.

The grooves 22Cg in the side of the cathode-side separator 22C facing the GDL 21C function as flow passages through which oxidizing gas, such as air, flows. The grooves 22Cw in the side opposite to the side facing the GDL 21 function as flow passages through which cooling water flows.

The grooves 22Ag in the side of the anode-side separator 22A facing the GDL 21A function as flow passages through which fuel gas, such as hydrogen or hydrogen-containing gas, flows. The grooves 22Aw in the side opposite to the side facing the GDL 21A function as flow passages through which cooling water flows.

The oxidizing gas flowing through the grooves 22Cg of the cathode-side separator 22C is supplied to the cathode 20C, and the fuel gas flowing through the grooves 22Ag of the anode-side separator 22A is supplied to the anode 20A. The electrochemical reaction described above thus occurs. As a result, a DC voltage is generated between the cathode 20C and the anode 20A.

Examples of the material of the separators 22 include metal materials, such as stainless steel, and carbon materials, such as graphite, although not limited thereto.

The PEFC 20 is formed by the components described above.

Since a PEFC 20 efficiently converts the chemical energy of hydrogen into electrical energy, a power generation system using the PEFC 20 is expected to become widespread. Moreover, since the PEFCs 20 is easier to downsize than conventional fuel cells, it is expected to be used as a small-scale fixed power source such as a vehicle on-board power source or a household power source.

A method for producing an electroconductive titanium oxide, a method for producing a metal-supported electroconductive titanium oxide, a method for producing the MEA 10, and a method for producing the PEFC 20 are now described.

### [Method for Producing Electroconductive titanium oxide]

The method for producing an electroconductive titanium oxide includes a gelation step of forming a gel from a solution including a titanium source and a carbon source. The method also includes a drying step of drying the gel obtained in the gelation step at a temperature in a range of 105°C to 200°C to prepare a dried material. It also includes a heating step of heating the dried material at a temperature in a range of 800°C to 1200°C in an atmosphere containing hydrogen.

There is no particular limitation on the titanium source, and known titanium compounds may be used. Preferred known titanium compounds are those that are easily soluble in a solvent such as water.

Specific examples of the titanium compound include titanyl sulfate and titanium fluoride. Titanyl sulfate and titanium fluoride are relatively stable in the atmosphere and thus easy to handle.

There is no particular limitation on the carbon source, and known carbon-containing compounds may be used. Preferred known carbon-containing compounds are those that are easily soluble in a solvent such as water. To make it function as a reducing agent for the titanium source, a carbon-containing compound with a relatively large carbon content is preferable. Examples of carbon-containing compounds with a relatively large carbon content include polymers in which the main chain is formed by the bonding between carbon atoms.

Specific examples of the polymer include polyethylene glycol and polyvinyl alcohol.

### (Gelation Step)

In the gelation step, a solution including a titanium source and a carbon source is first prepared using a solvent.

There is no particular limitation on the solvent, and known solvent may be used. Examples of known solvents include water and alcohol.

There is no particular limitation on the type of water, and distilled water, pure water, ultrapure water, purified water, tap water, or the like may be used.

There is no particular limitation on the type of alcohol, and methanol, ethanol, propanol, or the like may be used.

A mixture of water and alcohol in any proportion may also be used.

When preparing a solution including a titanium source and a carbon source, it is preferable to add the titanium source and the carbon source to a solvent and agitate it. A known agitator can be used for the agitation. The agitation may be performed while heating. The heating temperature during agitation while heating is preferably in a range of 30°C to 300°C, although not limited thereto.

There is no particular limitation on the contents of the titanium source and the carbon source in the solution, and the contents can be selected as appropriate. The contents of the titanium source and the carbon source in the solution are preferably set such that, assuming that the entire titanium source becomes titanium oxide (TiO₂), the mass ratio of the carbon source to TiOz is preferably in a range of 0.05 to 30, and more preferably in a range of 0.1 to 20.

Then, the solution including the titanium source and the carbon source is agitated to form a gel. At this time, heating while agitating achieves more uniform gelation in a shorter time. There is no particular limitation on the heating temperature during gelation, but it is preferably in a range of 50°C to 300°C, for example. The gelation may be performed without heating the solution. Alternatively, the gelation may be performed with the solution heated but not agitated.

### (Drying Step)

In the drying step, the gel obtained in the gelation step is dried at a temperature in a range of 105°C to 200°C to prepare a dried material. The drying temperature is more preferably in a range of 110°C to 180°C, and even more preferably in a range of 110°C to 150°C.

The term "dried material" as used herein refers to a material in which the solvent content is less than or equal to 20%. The dried material may also be referred to as a precursor.

A drying temperature within the above numerical range efficiently dries the gel. Also, when titanyl sulfate is used as the titanium source, a drying temperature greater than or equal to 105°C efficiently removes the sulfur in the raw material and thus reduces the sulfur content of the dried material.

There is no particular limitation on the drying time, but it is preferably is in a range of 0.5 hours to 40 hours, and more preferably in a range of 3 hours to 30 hours.

The drying step can use a known electric dryer.

After the drying step, the step of pulverizing the dried material into powder may be performed as appropriate. The step of pulverizing the dried material may also be referred to as the step of grinding the dried material.

### (Heating Step)

In the heating step, the dried material obtained in the drying step is heated at a temperature in a range of 800°C to 1200°C in an atmosphere containing hydrogen. The heating temperature is preferably in a range of 900°C to 1050°C.

By heating at a heating temperature within the above numerical range in an atmosphere containing hydrogen, the titanium compound contained in the dried material is efficiently reduced by the carbon source to produce an electroconductive titanium oxide. The reaction accompanied by the above reduction is also referred to as a carbothermal reduction reaction.

There is no particular limitation on the atmosphere containing hydrogen, and it may be an atmosphere containing a gas other than hydrogen. Examples of gases other than hydrogen include inert gases. Specific examples of inert gases include nitrogen gas, helium gas, and argon gas.

There is no particular limitation on the heating time, but it is preferably in a range of 1 hour to 8 hours. A heating time within the above numerical range produces an electroconductive titanium oxide in a shorter time.

By performing the above steps, an electroconductive titanium oxide is produced that has an electrical conductivity greater than or equal to 0.1 S/cm when measured under a pressure of 10 MPa. Also, the method for producing an electroconductive titanium oxide described above efficiently produces a titanium oxide having a single phase of Magneli phase or TisOs composition and an average particle size less than or equal to 500 nm. Specifically, in conventional methods for producing a titanium oxide having Magneli phase or TisOs composition, the heating needs to be performed for a long time while strictly controlling the amount of moisture in the atmosphere. As such, a single phase is difficult to prepare, and the heating for a long time may increase the particle size. In contrast, the method for producing an electroconductive titanium oxide according to the present invention produces an electroconductive titanium oxide in a short time without requiring strict control of the amount of moisture in the atmosphere. This facilitates the preparation of a single phase and also allows the particle size to be smaller. The method further improves the production efficiency.

Additionally, after the heating step, the step of pulverizing the fired material obtained through the heating step may be performed to form powder as appropriate. The step of pulverizing the fired material may also be referred to as the step of grinding the fired material.

### [Method for Producing Metal-supported Electroconductive Titanium Oxide]

A method for producing a metal-supported electroconductive titanium oxide includes a dispersing step of preparing a fluid dispersion by dispersing the electroconductive titanium oxide produced by the above method for producing an electroconductive titanium oxide and a metal solution in an organic solvent having a hydroxyl group. The method also includes a supporting step of supporting metal in the metal solution on the electroconductive titanium oxide by heating the fluid dispersion.

### (Dispersing Step)

The dispersing step prepares a fluid dispersion by dispersing the electroconductive titanium oxide produced by the above method for producing an electroconductive titanium oxide and a metal solution in an organic solvent having a hydroxyl group.

There is no particular limitation on the type of metal dissolved in the metal solution, and the metal used for the electrode catalysts can be used. There is no particular limitation on the solvent for the metal solution, and it may be an inorganic solvent, such as water or an inorganic acid, or an organic solvent, such as alcohol.

The metal dissolved in the metal solution may be of a single type, or two or more types of metals may be used in combination.

There is no particular limitation on the organic solvent having a hydroxyl group. For example, an organic solvent having a hydroxyl group bonded to a hydrocarbon group can be used. The hydrocarbon group may be an aromatic hydrocarbon group or an aliphatic hydrocarbon group. The aliphatic hydrocarbon group may be a straight chain aliphatic hydrocarbon group or a branched aliphatic hydrocarbon group. It may also be a saturated aliphatic hydrocarbon group or an unsaturated aliphatic hydrocarbon group.

Specific examples of an organic solvent having a hydroxyl group include alcohols, such as ethanol.

The organic solvent having a hydroxyl group may be of a single type, or two or more types of solvents may be used in combination.

### (Supporting Step)

In the supporting step, the fluid dispersion obtained in the dispersing step is heated so that the metal contained in the metal solution is supported on the electroconductive titanium oxide. Specifically, when the fluid dispersion is heated, the metal in the metal solution is reduced by the organic solvent having a hydroxyl group. The reduced metal particles are deposited on the surface of the electroconductive titanium oxide, so that the metal is supported on the electroconductive titanium oxide.

There is no particular limitation on the heating temperature, but it is preferably in a range of 20°C to 98°C, and more preferably in a range of 25°C to 95°C.

A heating temperature within the above numerical range allows the metal to be efficiently supported on the electroconductive titanium oxide.

There is no particular limitation on the heating time, but it is preferably in a range of 6 hours to 48 hours. A heating time within the above numerical range allows the metal to be supported on the electroconductive titanium oxide in a shorter time. The supporting step can use a known electric furnace.

Also, a post-treatment step may be performed after the supporting step.

There is no particular limitation on the post-treatment step, and a cleaning step and a drying step may be performed. In the cleaning step, the fluid dispersion that has undergone the supporting step may be suction-filtered, and cleaning may be performed using distilled water, for example. In the drying step, the material that has undergone the supporting step and the cleaning step may be naturally dried, or may be dried by heating in an atmosphere of an inert gas such as nitrogen gas. Also, both natural drying and drying under an inert gas atmosphere may be performed.

The conditions for heating and drying in an inert gas atmosphere may include drying at a temperature in a range of 20°C to 120°C for a duration in a range of 6 hours to 48 hours, drying in an atmosphere of nitrogen gas, and further drying at a temperature in a range of 120°C to 400°C for a duration in a range of 6 hours to 48 hours in an atmosphere of helium gas.

Through the above steps, a metal-supported electroconductive titanium oxide is obtained. In the metal-supported electroconductive titanium oxide, metal particles as a metal catalyst are supported in a dispersed state on the surface of the electroconductive titanium oxide. The supported metal particles are fine particles with an average particle size in a range of approximately 1 nm to 5 nm. The metal particles having an average particle size within the above numerical range improve the catalytic activity when used as the catalyst layer.

### [MEA Producing Method]

There is no particular limitation on the method for producing the MEA 10. For example, the catalyst layers 12 may be formed on a known transfer base material and bonded to the solid polymer electrolyte layer 11 by thermocompression bonding. Alternatively, the catalyst layers 12 may be formed on the pair of GDLs 21 and bonded to the solid polymer electrolyte layer 11 by thermocompression bonding. Furthermore, the catalyst layers 12 may be formed directly on the solid polymer electrolyte layer 11.

There is no particular limitation on the method for forming the catalyst layer 12, and it may be formed by applying catalyst ink to a transfer base material and drying it, for example.

The catalyst ink contains an electrode catalyst and a support. The catalyst ink may contain a polymer electrolyte and a solvent in addition to the above.

### [PEFC Producing Method]

There is no particular limitation on the method for producing a PEFC 20. For example, a known adhesive material may be applied to the outer peripheral sections of the opposite sides of the solid polymer electrolyte layer 11 forming the MEA 10 that are not covered by the pair of catalyst layers 12. The pair of gaskets 13 may be placed on this adhesive material and thus bonded to the outer peripheral sections of opposite sides of the solid polymer electrolyte layer 11.

Also, the pair of GDLs 21 may be placed on the pair of catalyst layers 12 forming the MEA 10, and the pair of separators 22 may be placed on the GDLs 21.

The PEFC 20 may be produced by the above method. The method for producing MEA 10 and the method for producing PEFC 20 are not limited to the above-mentioned producing methods, and the orders may be changed as appropriate.

Operation and advantageous effects of the electroconductive titanium oxide of the present embodiment are now described.
(1) The electroconductive titanium oxide has an electrical conductivity greater than or equal to 0.1 S/cm when measured under a pressure of 10 MPa. The electroconductive titanium oxide thus has the same level of electrical conductivity as graphite. As such, it can be used in place of the carbon material commonly used as a support of a catalyst layer. The use of the electroconductive titanium oxide, which has high durability, as a support of a catalyst layer advantageously suppresses the decreases in the durability of the support.
(2) The specific surface area of the electroconductive titanium oxide is greater than or equal to 100 m²/g. A specific surface area within the above numerical range increases the relative amount of the supported electrode catalyst. As such, when used for the catalyst layers of a solid polymer electrolyte fuel cell, it contributes to improved power generation performance.
(3) The metal-supported electroconductive titanium oxide includes the electroconductive titanium oxide described above and metal particles supported on the electroconductive titanium oxide. As such, it has high power generation performance when used for the catalyst layers of a solid polymer electrolyte fuel cell.
(4) The method for producing an electroconductive titanium oxide includes a gelation step of forming a gel from a solution including a titanium source and a carbon source, and the drying step of drying the gel obtained in the gelation step at a temperature in a range of 105°C to 200°C to prepare a dried material. It also includes a heating step of heating the dried material at a temperature in a range of 800°C to 1200°C in an atmosphere containing hydrogen.
   Thus, an electroconductive titanium oxide is prepared that has an electrical conductivity greater than or equal to 0.1 S/cm when measured under a pressure of 10 MPa. Also, the method efficiently produces a titanium oxide having a single phase of Magneli phase or TisOs composition and an average particle size less than or equal to 500 nm.
(5) A method for producing a metal-supported electroconductive titanium oxide includes a dispersing step of preparing a fluid dispersion by dispersing the electroconductive titanium oxide produced by the above method for producing an electroconductive titanium oxide and a metal solution in an organic solvent having a hydroxyl group. The method also includes a supporting step of supporting metal in the metal solution on the electroconductive titanium oxide by heating the fluid dispersion.

As such, the metal particles, which are fine particles with an average particle size in a range of about 1 nm to 5 nm, are supported on the electroconductive titanium oxide, thereby improving the catalytic activity when used as a catalyst layer.

### [Modifications]

The present embodiment may be modified and implemented as follows. The embodiment and the following modifications may be combined to an extent that does not cause technical contradiction.

The electroconductive titanium oxide and the metal-supported electroconductive titanium oxide of the present invention are not limited to a configuration for use in a membrane electrode assembly of a solid polymer electrolyte fuel cell. They may also be used as a membrane electrode assembly in fuel cells other than the solid polymer electrolyte fuel cells. They may also be used as a support for a catalyst layer or a catalyst layer of a member other than a membrane electrode assembly.

In the present embodiment, one of the pair of catalyst layers 12 forms the anode-side electrode catalyst layer 12A, and the other forms the cathode-side electrode catalyst layer 12C, but the invention is not limited to this configuration. One of the pair of catalyst layers 12 may form the cathode-side electrode catalyst layer 12C, and the other may form the anode-side electrode catalyst layer 12A. The same applies to the pair of gaskets 13, the pair of GDLs 21, and the pair of separators 22. That is, the solid polymer electrolyte fuel cell 20 may have a structure in which the top and bottom of Fig. 1 are reversed.

### EXAMPLES

Examples are given below to further clarify the configuration and the advantageous effects of the present invention, but the present invention is not limited to these examples.

### [Preparation of Electroconductive Titanium Oxide]

### (Example 1)

As the titanium source, titanyl sulfate having the chemical formula TiOSO₄·nH₂O was used.

As the carbon source, polyethylene glycol 400 (hereinafter also simply referred to as "polyethylene glycol") having an average molecular weight of 360 to 440 was used.

A mixed solution was prepared by mixing 491 mL of distilled water and 9 mL of polyethylene glycol. To this mixed solution, 24.5 g of titanyl sulfate was added. This mixed solution was agitated for 15 hours while being heated to 80°C using a known agitator to form a gel.

The obtained gel was dried at 150°C for 6 hours using a known electric dryer.

The obtained dried material was ground into powder in an agate mortar.

Then, 1 g of the powdered dried material was placed on a known alumina boat. This alumina boat was set in a quartz tubular furnace, and both ends of the quartz tubular furnace were sealed. Nitrogen gas was fed into the quartz tubular furnace for 20 minutes to replace the inside of the quartz tubular furnace with nitrogen gas.

Then, the gas flowing through the quartz tubular furnace was changed to a mixed gas of argon gas and hydrogen gas. The proportion of hydrogen gas in the mixed gas was 10% by volume.

The dried material was fired by increasing the temperature of the quartz tubular furnace to 967°C at a heating rate of 10°C/min. After being held at 967°C for 3 hours, it was naturally cooled to room temperature. Hereinafter, the temperature at which the dried material is heated is also referred to as a firing temperature.

The fired material obtained by firing the dried material was grounded in an agate mortar to obtain the electroconductive titanium oxide of Example 1.

### (Example 2)

An electroconductive titanium oxide was obtained in the same manner as in Example 1, except that the amount of dried powder placed on the alumina boat was changed to 2 g.

### (Example 3)

An electroconductive titanium oxide was obtained in the same manner as in Example 1, except that the amount of dried powder placed on the alumina boat was changed to 4 g.

### (Example 4)

An electroconductive titanium oxide was obtained in the same manner as in Example 1, except that the firing temperature was changed to 1000°C.

### (Example 5)

An electroconductive titanium oxide was obtained in the same manner as in Example 1, except that titanyl sulfate was replaced with titanium fluoride having the chemical formula of TiF₄.

### (Comparative Example 1)

An electroconductive titanium oxide was obtained in the same manner as in Example 1, except that 0.4 g of titanium oxide, having the chemical formula of TiOz, was used as the powdered dried material, and the firing temperature was changed to 1050°C and held for 6 hours.

### (Comparative Example 2)

An electroconductive titanium oxide was obtained in the same manner as in Example 1, except that the gel drying temperature was changed to 100°C. The obtained electroconductive titanium oxide had a strong sulfur odor originating from the raw material and was difficult to handle, and it was therefore not evaluated further.

### [Evaluation Method]

### (XRD Measurement)

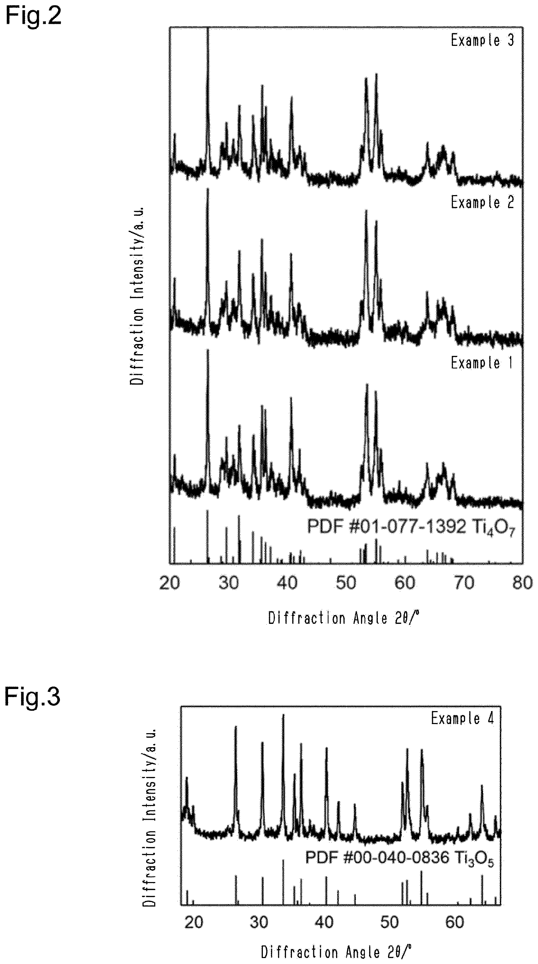

An XRD instrument (MiniFlex 600, manufactured by Rigaku Corporation) was used to measure the X-ray diffraction patterns of the electroconductive titanium oxides of Examples 1 to 5 and Comparative Example 1. Figs. 2 to 4 show the results.

### (Powder Electrical Conductivity Measurement)

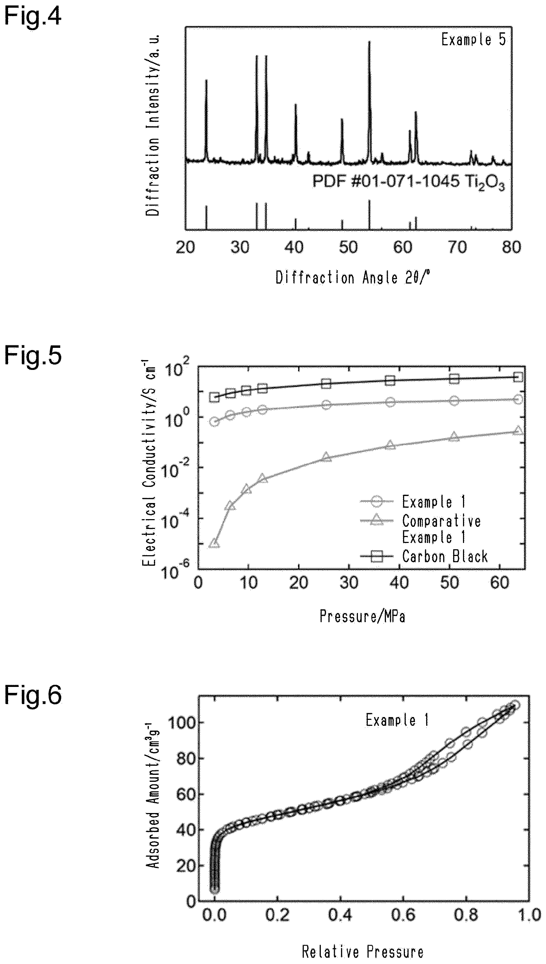

An automatic powder resistivity measurement system (MCP-PD600, manufactured by Nittoseiko Analytech Co., Ltd.) was used to measure the electrical conductivity of the electroconductive titanium oxides of Example 1 and Comparative Example 1. Also, as a reference, the electrical conductivity of commercially available carbon black was measured. The electrical conductivity was measured while applying pressure in the range of 3 MPa to 64 MPa. Fig. 5 shows the results.

### (Pore Size Distribution Measurement)

A specific surface area/pore size distribution measuring device (BELSORP MINI X, manufactured by MicrotracBEL Corp.) was used to measure the adsorption isotherm of the electroconductive titanium oxide of Example 1 at -196°C. Nitrogen (N₂) was used as the adsorbate molecule. Fig. 6 shows the results.

### (Average Particle Size Measurement)

A known scanning electron microscope was used to observe the electroconductive titanium oxides of Examples 1 to 5 and Comparative Example 1. In each example, the particle sizes of ten randomly selected electroconductive titanium oxides were measured, and the average value was obtained as the average particle size.

### [Preparation of Metal-supported Electroconductive Titanium Oxide]

### (Example 6)

A portion weighing 0.80 g of the electroconductive titanium oxide (Ti₄O₇) produced by the method described in Example 1 was used. This was dispersed in 100 mL of distilled water and ultrasonically agitated at 28 kHz for 5 minutes.

Then, 4.39 g of a dinitrodiamine platinum nitric acid solution having a platinum content of 4.555% by mass was added to 100 mL of distilled water, and the mixture was ultrasonically agitated at 28 kHz for 5 minutes.

These were combined such that the mass ratio between electroconductive titanium oxide and platinum (platinum : electroconductive titanium oxide) was 1:19.

The resulting mixed solution was placed in a container to which a reflux condenser was attached. The reflux condenser was immersed in a 25°C oil bath.

Using a magnetic stirrer, the mixture was agitated at room temperature for 1 hour at a rotation speed of 800 rpm. Ethanol was added three times into this container at a volume of 10 mL each time. The mixture was agitated at room temperature for 30 minutes at a rotation speed of 800 rpm.

The temperature of the oil bath was then raised to 95°C. In this state, the mixture was agitated at a rotation speed of 600 rpm for 12 hours to support platinum particles on the electroconductive titanium oxide.

The resulting fluid dispersion was suction-filtered, and cleaning was performed with 1000 mL of distilled water.

The resulting powder was air-dried overnight at room temperature. Then, a ceramic electric tubular furnace and a simple temperature control unit were used to dry the powder in a nitrogen gas atmosphere (60 cm³/min) at 80°C for 10 hours. Then, the atmosphere was changed to helium gas (60 cm³/min), and the powder was dried at 300°C for 2 hours. Through the above procedure, a metal-supported electroconductive titanium oxide was obtained. The platinum loading with respect to the electroconductive titanium oxide was 5% by mass.

### (Example 7)

The metal-supported electroconductive titanium oxide of Example 7 was obtained in the same manner as in Example 6, except that the mass ratio between the electroconductive titanium oxide and the platinum (platinum : electroconductive titanium oxide) was 1:9. The platinum loading with respect to the electroconductive titanium oxide was 10% by mass.

### (Example 8)

The metal-supported electroconductive titanium oxide of Example 8 was obtained in the same manner as in Example 6, except that the mass ratio between the electroconductive titanium oxide and the platinum (platinum : electroconductive titanium oxide) was 2:8. The platinum loading with respect to the electroconductive titanium oxide was 20% by mass.

### (Example 9)

The metal-supported electroconductive titanium oxide of Example 9 was obtained in the same manner as in Example 6, except that the mass ratio between the electroconductive titanium oxide and the platinum (platinum : electroconductive titanium oxide) was 3:7. The platinum loading with respect to the electroconductive titanium oxide was 30% by mass.

### (Comparative Example 3)

The metal-supported electroconductive titanium oxide of Comparative Example 3 was obtained in the same manner as in Example 8, except that the titanium oxide of Comparative Example 1 was used in place of the electroconductive titanium oxide of Example 1. The platinum loading with respect to the electroconductive titanium oxide was 20% by mass.

### [Preparation of MEA]

### (Example 10)

An MEA was prepared using the metal-supported electroconductive titanium oxide having a platinum loading of 5% by mass and prepared in Example 6 as the cathode catalyst and commercially available Pt/C (TEC10E50E, manufactured by TANAKA Kikinzoku Kogyo K.K.) as the anode catalyst. The MEA was incorporated into a single cell.

First, carbon paper was prepared to serve as a support member for the electrode catalyst layer. After forming an electrode catalyst layer on the carbon paper, it was bonded to a polymer electrolyte membrane by thermocompression bonding.

A mixture of 0.36 g of carbon black (Vulcan XC-72R, manufactured by Lion Corporation) and 7.2 mL of ethanol was ultrasonically agitated at 28 kHz for 10 minutes at room temperature.

Into the mixed solution, 2.2 g of polytetrafluoroethylene (hereinafter also referred to as "PTFE") solution diluted to 10.9% by mass was added.

The mixture was then agitated at room temperature for 20 minutes using a glass rod to prevent the PTFE from agglomerating.

After adding a small amount of ethanol using a pipette, prepared carbon black ink was applied onto the carbon paper and fired at 350°C for 1 hour in the air atmosphere.

A metal-supported electroconductive titanium oxide having a platinum loading of 5% by mass was mixed with a Nafion solution such that the mass ratio between the metal-supported electroconductive titanium oxide and the Nafion after drying (Nafion : metal-supported electroconductive titanium oxide) was 1:9, and applied to the carbon paper.

Pt/C was applied to carbon paper for the anode in the same manner. The amounts of the applied mixture were adjusted such that the amount of platinum used per geometric area was 0.5 mg/cm² for the cathode carbon paper, and 0.2 mg/cm² for the anode carbon paper, and the electrode area was 2.2 × 2.2 cm².

The anode carbon paper and the cathode carbon paper were placed on either side of the Nafion membrane and then covered with Teflon sheet frames (4.0 × 4.0 cm², 0.1 mm thick) and aluminum foils. Teflon is a registered trademark.

Each Teflon sheet frame was prepared by cutting out an inner section of 2.3 cm × 2.3 cm. Thermocompression bonding was performed at 135°C for 20 minutes under a pressure of 10.0 MPa, and the Teflon sheets were removed to obtain an MEA.

Pure hydrogen and pure oxygen were supplied to the anode and the cathode, respectively, at a flow rate of 85 ml/min to generate electricity. The hydrogen was humidified to 100% at 80°C, the oxygen was humidified to 100% at 75°C, and the single cell was set to 80°C to obtain current density-voltage characteristics.

### (Example 11)

An MEA and a single cell were prepared using the method described in Example 10, except that the cathode catalyst was changed to the metal-supported electroconductive titanium oxide having a platinum loading of 10% by mass and synthesized in Example 7, and the power generation characteristics were obtained.

### (Example 12)

An MEA and a single cell were prepared using the method described in Example 10, except that the cathode catalyst was changed to the metal-supported electroconductive titanium oxide having a platinum loading of 20% by mass and synthesized in Example 8, and the power generation characteristics were obtained.

### (Example 13)

An MEA and a single cell were prepared using the method described in Example 10, except that the cathode catalyst was changed to the metal-supported electroconductive titanium oxide having a platinum loading of 30% by mass and synthesized in Example 9, and the power generation characteristics were obtained.

### (Example 14)

An MEA and a single cell were prepared using the method described in Example 10, except that the anode catalyst in Example 12 was changed to the metal-supported electroconductive titanium oxide having a platinum loading of 20% by mass and synthesized in Example 8, and the power generation characteristics were obtained. That is, in the MEA of Example 14, a metal-supported electroconductive titanium oxide having a platinum loading of 20% by mass was used for both anode and cathode.

### (Reference Example 1)

An MEA and a single cell were prepared using the method described in Example 10, except that the cathode catalyst was changed to Pt/C, which is the same as the anode catalyst, and the power generation characteristics were obtained. That is, in the MEA of Reference Example 1, Pt/C was used for both anode and cathode.

### (Comparative Example 4)

An MEA and a single cell were prepared using the method described in Example 14, except that the metal-supported electroconductive titanium oxide having a platinum loading of 20% by mass and synthesized in Example 3 was used for the catalyst of both electrodes.

### [Evaluation Method]

### (Single Cell Power Generation Characteristics)

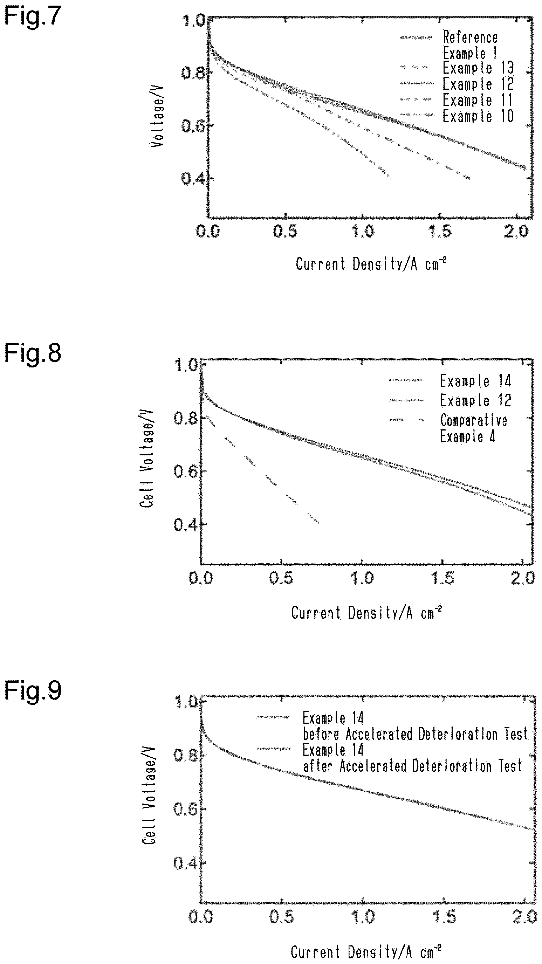

The power generation characteristics of single cells produced using the MEAs of Examples 10 to 14, Reference Example 1, and Comparative Example 4 were measured. Figs. 7 and 8 show the results.

### (Accelerated Deterioration Test)

Using the MEA of Example 14, an accelerated deterioration test was conducted to evaluate durability. After obtaining the initial power generation characteristics, the voltage was maintained at 0.6 V for 30 seconds while supplying hydrogen to the anode and oxygen to the cathode.

Then, 10000 cycles of square wave voltage, each cycle including 3 seconds at 1.0 V immediately followed by 3 seconds at 0.6 V, were repeated. Power generation characteristics were obtained every 1000 cycles. Fig. 9 shows the results.

### [Evaluation Results]

From the X-ray diffraction patterns shown in Figs. 2 to 4, the electroconductive titanium oxides of Examples 1 to 3 were found to have a single phase of Ti₄O₇. Also, the electroconductive titanium oxide of Example 4 was found to have a single phase of TisOs. The electroconductive titanium oxide of Example 5 was found to have a single phase of TizOs.

The results of powder electrical conductivity measurement shown in Fig. 5 indicate that the commercially available carbon black had an electrical conductivity of about 10 S/cm under a pressure of 10 MPa. The electroconductive titanium oxide of Comparative Example 1 had an electrical conductivity of about 0.001 S/cm under a pressure of 10 MPa. In contrast, the electroconductive titanium oxide of Example 1 was found to have an electrical conductivity of about 1 S/cm under a pressure of 10 MPa. It was also found to have high electrical conductivity over the entire measured range from 3 MPa to 64 MPa.

The adsorption/desorption isotherm of Fig. 6 indicates that the electroconductive titanium oxide of Example 1 had hysteresis in which the adsorption isotherm did not match the desorption isotherm, suggesting that the sample was a porous material. This is assumed to be caused by the aggregation of particles of electroconductive titanium oxide. The specific surface area calculated by the Brunauer-Emmett-Teller method was 172 m² /g, demonstrating that the specific surface area was one order of magnitude larger than that of general titanium oxides.

From the results of observation using a scanning electron microscope, the average particle sizes of the electroconductive titanium oxides of Examples 1 to 5 were 0.1 µm, 0.1 µm, 0.1 µm, 0.2 µm, and 0.3 µm, respectively. The average particle size of the electroconductive titanium oxide of Comparative Example 1 was 3 µm. From the values of the average particle size, the electroconductive titanium oxides of Examples 2 to 5 are assumed to have a specific surface area comparable to that of Example 1.

The results of power generation characteristics shown in Figs. 7 and 8 indicate that Comparative Example 4 had low power generation characteristics because of the use of the titanic acid compound with low electrical conductivity. In contrast, Examples 10 to 14 were all found to have improved power generation characteristics.

With Examples 10 to 13, increasing the platinum loading to a range of 20% to 30% by mass was found to improve the power generation characteristics. It is presumed that Ti₄O₇ had a large specific surface area and thus had a sufficient area to support the platinum. Generally, the cathode determines the performance of the PEFC, and the metal-supported electroconductive titanium oxide provided by the present invention is found to function satisfactorily as a cathode catalyst.

Example 14, in which Ti₄O₇ supporting platinum was used for both electrodes, demonstrated the power generation performance equivalent to those of Example 12, in which Ti₄O₇ supporting platinum was used only for the cathode, and Reference Example 1, in which Pt/C was used for both electrodes. It was found that Ti₄O₇ supporting platinum also functions satisfactorily as an anode catalyst.

Fig. 9 shows the power generation characteristics of a single cell before and after performing an accelerated deterioration test of 10000 cycles.

As shown in Fig. 9, in the test using the MEA of Example 14, the performance did not deteriorate even after the accelerated deterioration test of 10000 cycles, indicating high durability. As a result, it was found that the use of the electroconductive titanium oxide according to the present invention as a support for a catalyst layer can suppress the decreases in durability of the support.

### REFERENCE SIGNS LIST

10... Membrane Electrode Assembly; 11...Solid Polymer Electrolyte Layer; 12...Catalyst Layer; 12A...Anode-Side Electrode Catalyst Layer; 12C...Cathode-Side Electrode Catalyst Layer; 13...Gasket; 13A...Anode-Side Gasket; 13C...Cathode-Side Gasket; 20...Solid Polymer Electrolyte Fuel Cell; 20A...Anode; 20C...Cathode; 21...Gas Diffusion Layer; 21A...Anode-Side Gas Diffusion Layer; 21C...Cathode-Side Gas Diffusion Layer; 22...Separator; 22A...Anode-Side Separator; 22C...Cathode-Side Separator

## Claims

1. An electroconductive titanium oxide **characterized by** having an electrical conductivity greater than or equal to 0.1 S/cm when measured under a pressure of 10 MPa.

2. The electroconductive titanium oxide according to claim 1, having a specific surface area greater than or equal to 100 m²/g.

3. A metal-supported electroconductive titanium oxide **characterized by** the electroconductive titanium oxide according to claim 1 or 2 and metal particles supported on the electroconductive titanium oxide.

4. A membrane electrode assembly **characterized by**:
a solid polymer electrolyte layer; and
a pair of catalyst layers bonded to the solid polymer electrolyte layer,
wherein at least one of the pair of catalyst layers includes the metal-supported electroconductive titanium oxide according to claim 3.

5. A solid polymer electrolyte fuel cell **characterized by** the membrane electrode assembly according to claim 4, a pair of gas diffusion layers, and a pair of separators.

6. A method for producing an electroconductive titanium oxide, the method being **characterized by**:
a gelation step of forming a gel from a solution including a titanium source and a carbon source;
a drying step of drying the gel obtained in the gelation step at a temperature in a range of 105°C to 200°C to prepare a dried material; and
a heating step of heating the dried material at a temperature in a range of 800°C to 1200°C in an atmosphere containing hydrogen.

7. A method for producing a metal-supported electroconductive titanium oxide, the method being **characterized by**:
a dispersing step of preparing a fluid dispersion by dispersing, in an organic solvent having a hydroxyl group, a metal solution and an electroconductive titanium oxide produced by the method for producing an electroconductive titanium oxide according to claim 6; and
a supporting step of supporting metal in the metal solution on the electroconductive titanium oxide by heating the fluid dispersion.
